# EUROPÄISCHE PATENTSCHRIFT

(11) **EP 0 610 576 B1**
(45) Veröffentlichungstag und Bekanntmachung des Hinweises auf die Patenterteilung: **20.08.1997**
(21) Anmeldenummer: 93120053.9
(22) Anmeldetag: 13.12.1993
(51) Int. Cl.: C03B 5/00, C03B 5/03, C03B 5/027, B09B 3/00

(54) **Verfahren zum Gewinnen von Glas und Metall aus in Müllverbrennungsanlagen anfallenden festen Rückständen**
Method for recuperating glass and metal from slags remaining in an apparatus for burning wastes
Procédé de récupération du verre et du métal des restes d'installation de brûlage de déchets

(30) Priorität: 10.02.1993 CH 404/93
(43) Veröffentlichungstag der Anmeldung: 17.08.1994
(73) Patentinhaber: Von Roll Umwelttechnik AG, 8005 Zürich (CH)
(72) Erfinder: Schoener, Peter, Dr., D-65232 Taunusstein (DE); Pfluegl, Karl-Heinz, D-01689 Weinböhla (DE); Kiethe, Norbert, D-01468 Friedewald (DE)
(74) Vertreter: Patentanwälte Schaad, Balass, Menzl & Partner AG

(56) Entgegenhaltungen:
- EP-A- 0 430 369
- EP-A- 0 509 250
- EP-A- 0 515 792
- DE-U- 9 206 502
- FR-A- 2 112 345
- FR-A- 2 331 759

## Beschreibung

Die Erfindung betrifft ein Verfahren zum Gewinnen von Glas und Metall aus den in Müllverbrennungsanlagen anfallenden festen Rückständen gemäss dem Oberbegriff von Anspruch 1 sowie eine Vorrichtung zur Durchführung des Verfahrens.

In den Müllverbrennungsanlagen fallen 30 bis 35% der aufgegebenen Müllmenge als Schlacke an. Letztere enthält bis zu 10% an unverbrannten organischen Materialien und metallischen Bestandteilen. Die Eisenteile werden aus der Schlacke durch Magnetabscheider entfernt, worauf die Restschlacke zu Baumaterialien verarbeitet werden kann. Da die Restschlacke aber noch wasserlösliche Bestandteile enthält, führt ihr Einsatz zur Verunreinigung des Grundwassers. Alle anderen in einer Müllverbrennungsanlage anfallenden festen Rückstände, wie Kesselflugasche und Filterstäube, müssen Sonderdeponienen zugeführt werden.

Die bekannte Nassentschlackung der festen Rückstände ergibt keine vollständige Entfernung der wasserlöslichen Anteile und belastet die Gewässer.

Die Überführung von Abfallmaterialien u.a. auch Asche aus Müllverbrennungsanlagen in Glas ist aus EP-A2 0 359 003 und DE-C 38 41 918 bekannt. Dabei müssen die Abfälle vor dem Einschmelzen aufbereitet werden, insbesondere müssen sie von metallischen Bestandteilen befreit werden. Deshalb müssen heiss anfallende Abfälle, wie Schlacke, zuerst abgekühlt werden. Die Entfernung des Eisens, das in der Schlacke von Müllverbrennungsanlagen unregelmässig verteilt vorliegt, gelingt praktisch nie vollständig. Das restliche Eisen lagert sich bei der Glasherstellung im Ofen ab und bringt den Betrieb zum Erliegen. Die umständliche Vorbereitung der Schlacke und der aufwendige Betrieb des Ofens zwingen zur Trennung der Müllverbrennungsanlage und der Schmelzanlage.

Zur Vermeidung einer Umweltbelastung durch die beim Schmelzen entstehenden Gase müssen bei den bekannten Techniken umständliche Verfahren und aufwendige Einrichtungen angewendet werden.

Ausserdem müssen für die Glasschmelze grössere Mengen Zusatzstoffe eingesetzt werden, deshalb sind für das Aufschmelzen grosse Energiemengen erforderlich. Durch die Zusatzstoffe wird die Glasmenge, die in Deponien gelagert wird, wesentlich vergrössert.

Aus der EP-A2-0 515 792 ist es bekannt Rückstände aus einer Abfallverbrennungsanlage wie Rost-und Kesselasche in einem Schmelzofen mit einer einzigen Schmelzzone zu schmelzen. Die Schmelzenergie wird mittel eines Gas/Sauerstoffbrenners zugeführt. Gewonnen wird eine mit Metallen angereicherte Schmelze und eine Restschmelze.

Feste und flüssige Rückstände aus Sonderabfall-Verbrennungsanlagen werden gemäss EP-A1-0 509 250 aus einem Drehrohrofen einem Glasschmelzofen mit einer einzigen Schmelzzone zugeführt und dort unter Zusatz von glasbildenden Stoffen verglast. Soweit die in den Rückständen der Sonderabfallverbrennung gleichmässig verteilten Metallverbindungen im Glasschmelzofen zu Metall reduziert werden, sammelt sich die entstehende Metallschmelze von der Glasmasse getrennt am Boden des Glasschmelzofens.

Gemäss EP-A1-0 430 369 wird Asche aus der Müllverbrennung unter Zugabe von Glasbestandteilen in einer einzigen Schmelzzone eingeschmolzen.

Ziel der vorliegenden Erfindung ist es deshalb, ein Verfahren gemäss dem Oberbegriff von Anspruch 1 vorzuschlagen, das ohne Umweltbelastung wiederverwertbare Produkte liefert.

Ein weiteres Ziel der Erfindung ist es, die Reinigung der Schmelzgase ohne zusätzliche Verfahrensschritte und aufwendige Anlagen zu bewerkstelligen.

Ein weiteres Ziel der Erfindung ist es, ein Verfahren der eingangs genannten Art vorzuschlagen, das durch metallische Bestandteile im Ausgangsmaterial nicht zum Erliegen gebracht wird.

Diese Ziele werden erfindungsgemäss durch die Merkmale des kennzeichnenden Teils von Anspruch 1 erreicht. Bevorzugte Ausführungsformen der Erfindung bilden den Gegenstand der Ansprüche 2 bis 17.

Als feste Rückstände aus Müllverbrennungsanlagen kommen, neben der Schlacke, die die Hauptmenge bildet, auch Kesselflugasche und Filterstäube aus der Entstaubungsanlage der Müllverbrennungsanlage in Frage.

Erfindungsgemäss werden die festen Rückstände einem zweistufigen Schmelzvorgang unterworfen, wobei in einer ersten Schmelzphase oder ersten, oberen Schmelzzone die oxidischen, d.h. nichtmetallischen Bestandteile der festen Rückstände in eine Glasschmelze übergeführt werden und in einer zweiten Schmelzphase oder zweiten, unteren Schmelzzone die metallischen Bestandteile der festen Rückstände geschmolzen werden. Die Temperatur der zweiten, unteren Schmelzzone ist höher als jene der ersten, oberen Schmelzzone. Die beiden Schmelzen werden getrennt gewonnen. Die Glasschmelze wird vorzugsweise durch einen im oberen Bereich der ersten Schmelzzone angeordneten Überlauf abgezogen. Die Metallschmelze wird unterhalb der zweiten Schmelzzone abgestochen.

Das erfindungsgemässe Verfahren wird vorzugsweise anschliessend an die Müllverbrennung durchgeführt. Dadurch kann der Wärmegehalt der festen Rückstände, insbesondere der Schlacke, für den Schmelzprozess nutzbringend eingesetzt werden. Die Schlacke, die im allgemeinen eine Temperatur von ca. 800°C aufweist, gelangt vom Rost direkt in die erste, obere Schmelzzone, die eine Temperatur von etwas über 1500°C aufweist. In der Schlacke enthaltene Metallteile, hauptsächlich Eisen, schmelzen hier noch nicht und gelangen infolge des Dichteunterschiedes in die zweite, untere Schmelzzone mit einer Temperatur von 1580 bis 1600°C. Die Metallschmelze in der zweiten Schmelzzone wird aufgekohlt. Mit einem Kohlenstoffgehalt von 2 bis 3 % bleibt Eisen noch bei Temperaturen von 1300 bis 1350°C flüssig. Das Aufkohlen erfolgt mittels Graphitelektroden und/oder einer Graphitauskleidung der zweiten Schmelzzone. Die Metallschmelze gelangt dann in einen Sammelschacht. Allfällig dort vorhandene Glasschmelze wird infolge des Dichteunterschiedes von der Metallschmelze verdrängt. Die Metallschmelze wird periodisch abgestochen. Die gewonnene Metallmasse enthält typischerweise 95 % Eisen, 2 % Kohlenstoff und 3 % Verunreinigungen.

Die Beheizung der ersten und zweiten Schmelzzone erfolgt elektrisch, die erste vorzugsweise mit Molybdänelektroden und die zweite mit Kohlenstoffelektroden. Beide Zonen werden an mehrere, getrennt einstellbare, netzfrequente Wechselstromkreise angeschlossen.

Die während des Schmelzvorganges entstehenden Gase können dem Müllofen, vorzugsweise dem unteren Teil des Rostes, zugeführt werden. Da diese Gase im allgemeinen eine Temperatur von etwa 900°C aufweisen, bewirken sie eine Erhöhung der Temperatur im Müllverbrennungsraum, insbesondere im Bereich des Rostes und dadurch einen vollständigeren Ausbrand, was wiederum in eine höhere Energieausbeute resultiert. Die Gase aus dem Schmelzofen gelangen mit den Gasen der Müllverbrennung in die Abgasreinigungsanlage, so dass durch das erfindungsgemässe Verfahren keine Belastung der Umwelt erfolgt.

Die Erfindung wird anhand der Zeichnungen weiter veranschaulicht. Es zeigen rein schematisch:

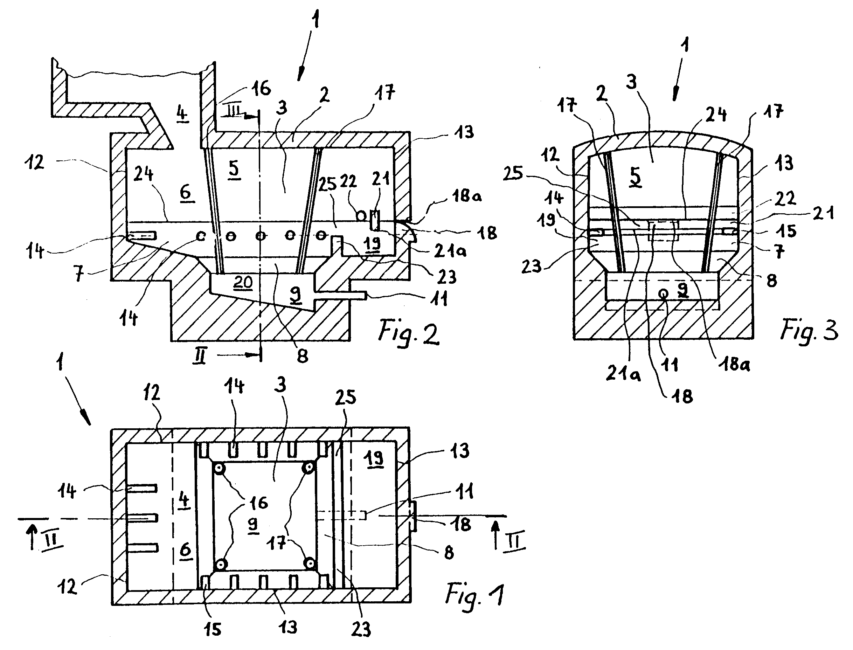

- Figur 1: den Grundriss einer erfindungsgemässen Vorrichtung;
- Figur 2: einen vertikalen Schnitt durch die erfindungsgemässe Vorrichtung gemäss Figur 1 und
- Figur 3: einen weiteren Schnitt durch die erfindungsgemässe Vorrichtung gemäss Figur 1.

In den Figuren werden für dieselben Elemente dieselben Bezugszeichen verwendet.

Die erfindungsgemässe Vorrichtung 1 besitzt einen mit einem Gewölbe 2 abgeschlossenen Schmelzofen 3, der über einen Beschickungsschacht 4 mit dem Rostbereich der (nicht dargestellten) Müllverbrennungsanlage verbunden ist. Unmittelbar unter dem Gewölbe 2 ist ein freier Ofenraum 5 angeordnet, in dessen Aufgabenbereich 6 der Beschickungsschacht 4 mündet und der nach unten durch eine erste, obere Schmelzzone 7 begrenzt ist. Unter der ersten Schmelzzone 7 ist eine zweite Schmelzzone 8 angeordnet, die im untersten Bereich des Schmelzofens 3 in einen Sammelschacht 9 für Metallschmelze übergeht. Letzterer weist ein Abstechloch 11 zur Entnahme der Metallschmelze auf. Die Wände 12, 13 der ersten Schmelzzone 7 sind von wassergekühlten Heizelektroden 14, 15, vorzugsweise aus Molybdän, durchsetzt. Der zweiten Schmelzzone 8 wird mittels vertikal angeordneten nachstellbaren Kohlenstoffelektroden 16, 17 zusätzliche Wärmeenergie zugeführt. Die Wände 12, 13 der ersten Schmelzzone 7 sowie der Beschickungsschacht 4 sind mit schmelzflussgegossenem Feuerfestmaterial und die Wände der zweiten Schmelzzone 8 sowie der Sammelschacht 9 mit Kohlenstoffsteinen ausgekleidet. Im oberen Bereich der ersten Schmelzzone 7 ist eine Überlauflippe 18 für die Entnahme von Glasschmelze 19 aus der ersten Schmelzzone 7 angeordnet. Der Überlauflipppe 18 ist ein Abstreifer 21 vorgeordnet, der allfälligen, auf der Oberfläche der Glasschmelze 19 schwimmenden Schaum zurückhält. Dabei liegt die Unterkante 21a des Abstreifers tiefer als die Oberkante 18a der Überlauflippe. Vor dem Abstreifer 21 befindet sich eine elektrisch beheizte Gallenabzugsvorrichtung 22, mit der allfällig gebildete Galle abgezogen wird. In der ersten Schmelzzone 7 ist der Überlauflippe 18 eine Barriere 23, deren oberes Ende unterhalb der Oberfläche 24 der Glasschmelze 19 liegt, vorgeordnet, die einen obenliegenden Glasdurchlass 25 definiert und sicherstellt, dass kein Metall zur Überlauflippe 18 gelangen kann.

Im Betrieb gelangt Schlacke mit etwa 800°C vom Rost der Müllverbrennungsanlage durch den Beschickungsschacht 4 über den freien Ofenraum 5 des Schmelzofens 3 in die erste, obere Schmelzzone 7. Hier wird sie rasch auf etwa 1300 bis 1500°C erwärmt und geschmolzen. Die metallischen Bestandteile sinken während des Schmelzvorganges aus der ersten, oberen Schmelzzone 7 in die zweite, untere Schmelzzone 8, wo sie bis auf 1600°C erwärmt und geschmolzen werden. Die Metallschmelze sinkt in den Sammelschacht 9 und wird periodisch, wenn der Metallpegel die Graphitelektoden 16, 17 erreicht, z.B. alle vier Tage, abgestochen. Die Metallschmelze, die zu über 90 % aus Eisen besteht, wird durch die Graphitelektroden 16, 17 und durch die Kohlenauskleidung des Sammelschachtes 9 aufgekohlt. Sie wird dem Sammelschacht 9 durch das Abstichloch 11 in geschmolzenem Zustand entnommen und kann auf bekannte Art weiterverwendet werden.

Die über die Überlauflippe 18 entnommene Glasschmelze 19 liefert Schwarzglas, das zu verschiedenen Gegenständen verarbeitet werden kann. Die in der Schlacke enthaltenen umweltgefährdenden wasserlöslichen Stoffe sind durch Einschluss in die Glasmatrix innertisiert.

Die beim Schmelzen entstehenden Gase gelangen, infolge des im Müllofen herrschenden Unterdruckes, über den freien Ofenraum 5 und dem Beschickungsschacht 4, im Geggenstrom zur Schlacke, zum unteren Teil des Rostes. Durch Wärmeaustausch erhöhen sie die Schlackentemperatur und verbessern den Ausbrand der Schlacke. Sie gelangen dann mit den Verbrennungsgasen zum Wärmeaustauscher und in die Abgasreinigung. Durch die Gase aus der Schmelzvorrichtung wird die Wärmebilanz der Müllverbrennung verbessert.

## Patentansprüche

1. Verfahren zum Gewinnen von einer oberen Glasschmelze und einer unteren metallhaltigen Schmelze aus in einer Müllverbrennungsanlage anfallenden festen Rückständen, insbesondere aus Schlacken, durch Schmelzen der festen Rückstände, dadurch gekennzeichnet, dass man die festen, metallische Bestandteile enthaltenden Rückstände einem Schmelzvorgang unterwirft, wobei man in einer ersten, oberen Schmelzzone (7) die oxidischen Bestandteile der festen Rückstände mittels Heizelektroden (14, 15) in eine Glasschmelze (19) überführt, die metallischen Bestandteile der festen Rückstände einer zweiten, unteren Schmelzzone (8) mit von Kohlenstoffelektroden (16, 17) erzeugten höherer Temperatur als jene der ersten Schmelzzone (7) zuführt, dort in eine Metallschmelze (20) überführt und beide Schmelzen getrennt gewinnt.

2. Verfahren nach Anspruch 1, dadurch gekennzeichnet, dass man die Schlacke vom Verbrennungsrost der Müllverbrennungsanlage direkt der ersten Schmelzzone (7) zuführt.

3. Verfahren nach einem der vorangehenden Ansprüche, dadurch gekennzeichnet, dass man die beim Schmelzen entstehenden Gase in den Ofenraum der Müllverbrennungsanlage zuführt.

4. Verfahren nach einem der vorangehenden Ansprüche, dadurch gekennzeichnet, dass man die beim Schmelzen entstehenden Gase dem Verbrennungsrost, vorzugsweise dem unteren Teil des Verbrennungsrostes, zuführt.

5. Verfahren nach einem der vorangehenden Ansprüche, dadurch gekennzeichnet, dass man Kesselflugasche und Filterstäube aus der Entstaubungsanlage der Müllverbrennungsanlage dem Schmelzvorgang zuführt.

6. Verfahren nach einem der vorangehenden Ansprüche, dadurch gekennzeichnet, dass man dem Schmelzvorgang Zusatzstoffe zur Beeinflussung des Schmelzvorganges und/oder der Eigenschaften der Schmelzprodukte zugibt.

7. Verfahren nach einem der vorangehenden Ansprüche, dadurch gekennzeichnet, dass man die Glasschmelze (19) im obersten Bereich der ersten, oberen Schmelzzone (7) gewinnt und die Metallschmelze (20) unterhalb der zweiten, unteren Schmelzzone (8) absticht.

8. Verfahren nach einem der vorangehenden Ansprüche, dadurch gekennzeichnet, dass man an der Oberfläche der Glasschmelze (24) entstehenden Schaum von der Glasschmelze trennt.

9. Verfahren nach einem der vorangehenden Ansprüche, dadurch gekennzeichnet, dass man die Galle von der Oberfläche der Glasschmelze (24) in der ersten, oberen Schmelzzone (7) wegführt.

10. Verfahren nach einem der vorangehenden Ansprüche, dadurch gekennzeichnet, dass man das Verfahren kontinuierlich durchführt.

11. Vorrichtung zur Durchführung des Verfahrens nach einem der vorangehenden Ansprüche, gekennzeichnet durch einen geschlossenen Schmelzofen (3) mit einer ersten, oberen Schmelzzone (7) mit Heizelektroden (14, 15) für die Glasschmelze (19), einer zweiten, unteren Schmelzzone (8) mit Kohlenstoffheizelektroden (16, 17) für die Metallschmelze (20) und einen in den oberen Teil des Schmelzofens (3) mündenden Beschickungsschacht (4) für die zu schmelzenden festen Rückstände.

12. Vorrichtung nach Anspruch 11, gekennzeichnet durch einen im oberen Teil der ersten, oberen Schmelzzone (7) angeordneten Überlauf (18) für die kontinuierliche Entnahme der Glasschmelze (19).

13. Vorrichtung nach einem der Ansprüche 11 bis 12, dadurch gekennzeichnet, dass die zweite, untere Schmelzzone (8) eine Kohlenstoffauskleidung aufweist.

14. Vorrichtung nach einem der Ansprüche 11 bis 13, dadurch gekennzeichnet, dass sie unterhalb der zweiten, unteren Schmelzzone (8) einen Sammelschacht (9) mit einer Abstecheinrichtung (11) zur diskontinuierlichen Entnahme der Metallschmelze (20) aufweist.

15. Vorrichtung nach einem der Ansprüche 11 bis 14, dadurch gekennzeichnet, dass sie dem Überlauf (18) vorgeordnet eine zu der Oberfläche (24) der Glasschmelze (19) beabstandete Barriere (23) aufweist, welche einen obenliegenden Glasdurchlass (25) definiert.

16. Vorrichtung nach einem der Ansprüche 11 bis 15, dadurch gekennzeichnet, dass der Beschickungsschacht (4) die Müllverbrennungsanlage mit dem oberen Teil des Schmelzofens verbindet.

17. Vorrichtung nach einem der Ansprüche 11 bis 16, dadurch gekennzeichnet, dass der Beschickungsschacht (4) zur Rückführung der Schmelzgase in die Müllverbrennungsanlage ausgebildet ist.

## Claims

1. A method for recovering an upper glass melt (19) and a lower melt containing metals, from solid residues produced in a refuse incineration plant, in particular slags, by melting the solid residues, characterized in that the residues containing solid metal constituents are subjected to a melting process, wherein the oxidic constituents of the solid residues are transferred in a first, upper melting zone (7) into a glass melt (19) by means of heating electrodes (14, 15), the metal constituents of the solid residues are fed to a second, lower melting zone (8) with a higher temperature than that of the first, upper melting zone (7), generated by carbon electrodes (16, 17), are there transferred into a metal melt (20) and both melts are recovered separately.

2. A method according to claim 1, characterized in that the slag is directly fed from the incineration grate of the refuse incineration plant to the first melting zone (7).

3. A method according to one of the preceding claims, characterized in that the gases produced during the melting are fed to the furnace chamber of the refuse incineration plant.

4. A method according to one of the preceding claims, characterized in that the gases produced during the melting are fed to the incineration grate, preferably the bottom portion of the incineration grate.

5. A method according to one of the preceding claims, characterized in that the boiler fly ash and filter dust from the dust clearance installation of the refuse incineration plant are fed to the melting process.

6. A method according to one of the preceding claims, characterized in that additives are added to the melting process for affecting the melting process and/or the properties of the melt products.

7. A method according to one of the preceding claims, characterized in that the glass melt (19) is recovered in the uppermost zone of the first, upper melting zone (7), and the metal melt (20) is drawn off beneath the second, lower melting zone (8).

8. A method according to one of the preceding claims, characterized in that the scum produced on the surface of the glass melt (24) is separated from the glass melt.

9. A method according to one of the preceding claims, characterized in that the undissolved sulphates are removed from the surface of the glass melt (24) in the first, upper melting zone (7).

10. A method according to one of the preceding claims, characterized in that the method is carried out on a continuous basis.

11. An apparatus for effecting the method according to one of the preceding claims, characterized by a closed melting furnace (3) with a first, upper melting zone (7) with heating electrodes (14, 15) for the glass melt (19), a second, lower melting zone (8) with carbon heating electrodes (16, 17) for the metal melt (20) and a feeding well (4) leading into the upper portion of the melting furnace (3), for the solid residues to be melted.

12. An apparatus according to claim 11, characterized by an overflow (18) arranged in the upper portion of the first, upper melting zone (7), for the continuous drawing off of the glass melt (19).

13. An apparatus according to one of claims 11 to 12, characterized in that the second, lower melting zone (8) has a carbon lining.

14. An apparatus according to one of claims 11 to 13, characterized in that it has beneath the second, lower melting zone (8) a collecting well (9) with a drawing-off device (11) for the discontinuous drawing off of the metal melt (20).

15. An apparatus according to one of claims 11 to 14, characterized in that it has, arranged ahead of the overflow (18), a barrier (23) interspaced from the surface (24) of the glass melt (19), which defines a glass port (25) lying at the top.

16. An apparatus according to one of claims 11 to 15, characterized in that the feeding well (4) connects the refuse incineration plant to the upper portion of the melting furnace.

17. An apparatus according to one of claims 11 to 16, characterized in that the feeding well (4) is designed for returning the melt gases into the refuse incineration plant.

## Revendications

1. Procédé de récupération d'une masse fondue supérieure en verre et d'une masse fondue inférieure contenant des métaux, à partir de résidus solides se formant dans une usine d'incinération d'ordures, en particulier en provenance de scories, par fusion de ces résidus solides, caractérisé en ce que l'on soumet ces résidus solides, contenant des constituants métalliques à un processus de fusion, les produits oxydés des résidus solides étant convertis en une masse fondue en verre (19) grâce à des électrodes de chauffage (14, 15) dans une première zone de fusion supérieure (7), les constituants métalliques des résidus solides étant acheminés vers une deuxième zone de fusion inférieure (8), à la température produite par des électrodes de carbone (16, 17), plus élevée que celle de la première zone de fusion (7), ces derniers y étant convertis en une masse fondue métallique (20), et les deux masses fondues étant récupérées séparément.

2. Procédé selon la revendication 1, caractérisé en ce que l'on achemine les scories de la grille de combustion de l'usine d'incinération d'ordures, directement à la première zone de fusion (7).

3. Procédé selon l'une quelconque des revendications précédentes, caractérisé en ce que l'on achemine les gaz, qui se forment lors de la fusion dans l'enceinte du four, à l'usine d'incinération d'ordures.

4. Procédé selon l'une quelconque des revendications précédentes, caractérisé en ce que l'on achemine les gaz qui se forment lors de la fusion à la grille de combustion, de préférence à la partie inférieure de cette grille de combustion.

5. Procédé selon l'une quelconque des revendications précédentes, caractérisé en ce que l'on introduit les cendres volantes et les poussières des filtres en provenance du dépoussiéreur de l'usine d'incinération d'ordures, dans le processus de fusion.

6. Procédé selon l'une quelconque des revendications précédentes, caractérisé en ce que l'on ajoute au processus de fusion des additifs, destinés à influencer ce processus de fusion et/ou les propriétés des produits de fusion.

7. Procédé selon l'une quelconque des revendications précédentes, caractérisé en ce que l'on récupère la masse fondue en verre (19) dans la région supérieure de la première zone de fusion (7) et que l'on soutire la masse fondue métallique (20) en dessous de la deuxième zone de fusion (8).

8. Procédé selon l'une quelconque des revendications précédentes, caractérisé en ce que l'on sépare la mousse qui se forme sur la surface de la masse fondue en verre (24) de la masse fondue en verre.

9. Procédé selon l'une quelconque des revendications précédentes, caractérisé en ce que l'on évacue dans la première zone de fusion (7) la soufflure de la surface de la masse fondue en verre (24).

10. Procédé selon l'une quelconque des revendications précédentes, caractérisé en ce que l'on effectue le procédé en continu.

11. Dispositif pour l'exécution du procédé selon l'une quelconque des revendications précédentes, caractérisé par un four de fusion clos (3), ayant une première zone de fusion supérieure (7) à électrodes de chauffage (14, 15) pour la masse fondue en verre (19), une deuxième zone de fusion inférieure (8) à électrodes de chauffage en carbone (16, 17) pour la masse fondue métallique (20), et par un puits de chargement (4), débouchant dans la partie supérieure du four de fusion (3) pour les résidus solides à fondre.

12. Dispositif selon la revendication 11, caractérisé par un trop-plein (18) disposé dans la partie supérieure de la première zone de fusion (7) pour le retrait continu de la masse fondue en verre (19).

13. Dispositif selon l'une quelconque des revendications 11 à 12, caractérisé en ce que la deuxième zone de fusion (8) présente un garnissage en carbone.

14. Dispositif selon l'une quelconque des revendications 11 à 13, caractérisé en ce qu'il présente en dessous de la deuxième zone de fusion (8), un puits de collection (9) ayant un équipement de prélèvement (11), en vue du retrait en discontinu de la masse fondue métallique (20).

15. Dispositif selon l'une quelconque des revendications 11 à 14, caractérisé en ce qu'il présente, disposé avant le trop-plein (18), une barrière (23, placée à une certaine distance de la surface (24) de la masse fondue en verre (19), qui définit un passage pour le verre (25) se trouvant au-dessus.

16. Dispositif selon l'une quelconque des revendications 11 à 15, caractérisé en ce que le puits de chargement (4) relie l'usine d'incinération d'ordures avec la partie supérieure du four de fusion.

17. Dispositif selon l'une quelconque des revendications 11 à 16, caractérisé en ce que le puits de chargement (4) est formé en vue du recyclage des gaz de fusion dans l'usine d'incinération d'ordures.
